# EUROPEAN PATENT SPECIFICATION

(11) **EP 4 623 235 B1**
(45) Date of publication and mention of the grant of the patent: **01.04.2026**
(21) Application number: 23828471.5
(22) Date of filing: 22.11.2023
(51) Int. Cl.: F16L 37/20, F16L 37/56, H01R 43/26

(54) **MULTI-CONNECTION DEVICE WITH FRONTAL COUPLING PLATES FOR SIMULTANEOUS COUPLING OF TWO OR MORE HYDRAULIC AND/OR ELECTRIC LINES**
MEHRFACHVERBINDUNGSVORRICHTUNG MIT STIRNSEITIGEN KOPPLUNGSPLATTEN ZUR GLEICHZEITIGEN KOPPLUNG VON ZWEI ODER MEHR HYDRAULISCHEN UND/ODER ELEKTRISCHEN LEITUNGEN
DISPOSITIF MULTI-CONNEXION AVEC PLAQUES D'ACCOUPLEMENT FRONTALES POUR LE COUPLAGE SIMULTANÉ D'AU MOINS DEUX LIGNES HYDRAULIQUES ET/OU ÉLECTRIQUES

(30) Priority: 25.11.2022 IT 202200024333
(43) Date of publication of application: 01.10.2025
(73) Proprietor: FASTER S.r.l., 26027 Rivolta d'Adda (CR) (IT)
(72) Inventor: SORBI, Roberto, 26027 Rivolta D'Adda (CR) (IT); DANELLI, Alessandro, 24053 Brignano Gera D'Adda (BG) (IT)
(74) Representative: Bianchetti & Minoja with Trevisan & Cuonzo IPS SRL
(86) International application number: PCT/IB2023/061794
(87) International publication number: WO 2024/110894

(56) References cited:
- EP-A1- 3 569 911
- DE-U1- 202010 014 532
- US-A1- 2011 272 937
- US-A1- 2021 062 949

## Description

### FIELD OF THE INVENTION

The present invention concerns a multi-connection device of the type with frontal coupling plates supporting a plurality of quick couplings, male and female, for the connection of hydraulic lines and/or a plurality of electrical connectors for the connection of electrical lines.

The multi-connection device according to the present invention provides an innovative system of levers that allows to reduce the overall encumbrance compared to the multi-connection systems of known type.

In addition, the multi-connection device with frontal coupling according to the present invention allows to have a precise and simple coupling between the plates without the need to have to provide for the presence of plugs and corresponding holes on the opposed plates to ensure the alignment thereof during the connection step. This allows to further compact the device as the entire surface of the plates can be used for positioning the couplings and/or connectors.

### STATE OF THE ART

It is known in the state of the art to make the connection of a plurality of hydraulic lines for oleodynamic applications and/or of electrical lines by means of multi-connection plate devices, in which a fixed plate is generally connected to the vehicle and supports a plurality of female couplings and/or female connectors, and a movable plate is generally connected to the user and supports a corresponding plurality of male quick couplings and/or male electrical connectors.

The connection of the movable plate to the fixed plate takes place by means of a lever coupling system that rotatably moves a pair of guide cams within which pins or rollers associated with the movable plate can be slidably engaged, so that by moving the lever to be closed, the approach and the clamping of the movable plate on the fixed plate is obtained. In the known systems, the presence of guide plugs and of corresponding holes for receiving said plugs on the opposed plates ensures the alignment between the couplings and/or the male and female connectors, so that by coupling the plates the connection of the couplings and/or the connectors is obtained at the same time.

Known solutions are described for example in EP 3 569 911 A1 on behalf of the same Applicant, as well as in US 2021/062949 A1, in US 2011/272937 A1 and DE 202010014532 U1 which provide examples in which the couplings are coupled with a substantially vertical reciprocal movement of the plates supporting the couplings or of the couplings themselves.

These solutions of known type suffer from some drawbacks.

These drawbacks include the dimensions of the coupling lever and of the plate-shaped elements that are part of the lever system and in which the grooves for the sliding of the rollers are obtained. The wide dimensions of the coupling lever are a consequence of both the need to reduce the connection effort necessary to couple the two plates, and the need to resist the separation forces caused by the hydraulic pressure affecting the lines and, therefore, the couplings.

A further drawback that afflicts the systems of known type consists in the encumbrance of plugs and guide holes necessary to align and guide the plates during the coupling step and which subtract space from the hydraulic couplings and/or the electrical connectors, making it necessary to have larger-sized plates to contain the same number of couplings/connectors.

These drawbacks are perceived negatively by the user, who requires where possible devices of reduced dimensions and weights.

### SUMMARY OF THE INVENTION

In light of the above, the task of the present invention is to provide a compact multi-connection device with frontal coupling plates supporting a plurality of quick couplings, male and female, for the simultaneous connection of a plurality of hydraulic lines and/or electrical connectors that allows to solve the inconveniences left unresolved by the state of the art.

Within this task, the object of the present invention is to provide a compact device for the simultaneous connection of a plurality of hydraulic lines and/or electrical connectors that has reduced dimensions compared to an equivalent device of known type, with the same couplings.

Still, an object of the present invention is to provide a compact device for the simultaneous connection of a plurality of hydraulic lines and/or electrical connectors incorporating a closing and protection system of the fixed plate.

The task set out above, as well as the aforementioned objects and others that will become clearer later, are achieved by a compact frontal connection plate device for the simultaneous connection of a plurality of hydraulic lines and/or electrical connectors according to the appended claim 1.

Other characteristics of the compact frontal connection plate device for the simultaneous connection of a plurality of hydraulic lines and/or electrical connectors according to the present invention are indicated in the dependent claims, which also form an integral part of the present description.

### LIST OF FIGURES

Further characteristics and advantages of the present invention will become clearer from the description of a preferred, but not exclusive, embodiment of the compact frontal connection plate device for the simultaneous connection of a plurality of hydraulic lines and/or electrical connectors according to the present invention, illustrated by way of example and not limitation with the aid of the accompanying drawings in which:
Figure 1 shows a perspective view of the assembly of the device according to the present invention in a condition of connected plates and with lever in closed position;
Figure 2 shows a perspective view of the fixed plate of the device according to the present invention in a disconnected condition with lever in closed position and lid closed;
Figure 3 shows a perspective view of the fixed plate of Figure 2 in a lever condition in a fully open position and lid in a partially open condition;
Figures 4 and 5 each show a partial sectional side view of the lever condition in the intermediate position of Figure 3;
Figure 6 shows a partial sectional view of the lever condition in the open position of Figure 3 in which it is possible to appreciate the spring that leads the lid to the closed position;
Figure 7 shows a partial sectional view of the lever condition in the open position of Figure 3 in which it is possible to appreciate the action of the plugs that move the lid to be opened;
Figure 8 illustrates a perspective assembly view of the movable plate of the device according to the present invention;
Figure 9 illustrates the subsequent connection step in which the movable plate is brought closer to the fixed plate by positioning it between the tie-rods with a sliding movement;
Figure 10 illustrates a partial sectional view with a vertical plane of the view of Figure 9 in which the reciprocal positioning of the movable plate and of the closing lid can be noted;
Figure 11 illustrates a subsequent connection step in which the movable plate is completely inserted into the grooves present in the tie-rods, although the lever is still in the open position corresponding to an unclamped plate condition;
Figures 12 and 13 each illustrate a partial sectional side view of the coupling condition of Figure 11;
Figure 14 illustrates a partial sectional side view of a condition in which the lever is lowered and the plates coupled.

### DETAILED DESCRIPTION OF THE INVENTION

With particular reference to the attached figures, the compact frontal connection plate device **100** for the simultaneous connection of a plurality of hydraulic lines and/or electrical connectors according to the present invention comprises a fixed part **10** and a movable part **20.**

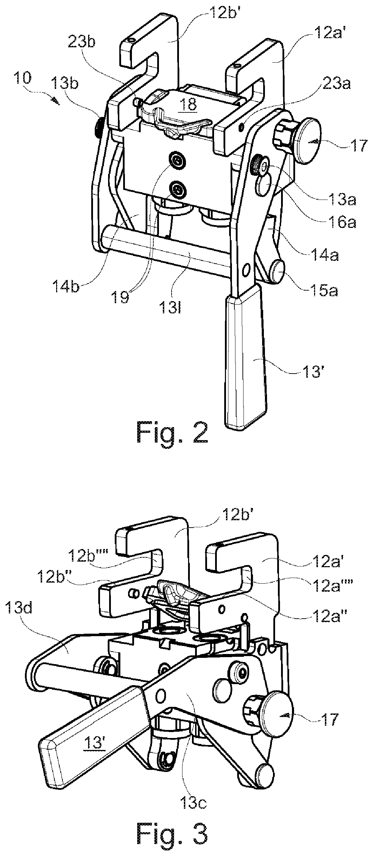

The fixed part **10** comprises the assembly visible in Figure 2 comprising not only the fixed plate **11** within which the female couplings **11'** are housed, but also the connection lever group **13,** the protection lid **18** of the fixed plate **11** and a pair of vertical tie-rods **12a, 12b** slidably associated vertically with said fixed plate **11** and moved by said lever group **13** by means of connecting rods **14a, 14b.**

More in detail, with reference to Figures 2 and 3, the fixed part **10** comprises a fixed plate **11** within which a plurality of female couplings **11'** is housed and on which the lever group **13** is hinged.

The lever group **13** comprises in turn the handle **13'** apt to be gripped by the operator for the movement of the lever group itself, and a pair of shaped plates **13c, 13d** which are pivoted to the opposite sides of said fixed plate **11** at a pair of first coaxial pins **13a, 13b.**

In order to stiffen the lever group **13** and to make it possible to use a single handle **13',** a connection element **13I**, constituted in the example shown in the figures by a cylindrical bar **13I**, connects together said shaped plates **13c and 13d.**

Said lever group **13** further comprises said pair of connecting rods **14a, 14b,** placed on the sides of said lower fixed plate **11,** pivoted respectively to one of said vertical tie-rods **12a, 12b** at second hinge pins **15a, 15b,** and to said shaped plates **13c, 13d** at third hinge pins **16a, 16b.**

The configuration and the operation of the lever group **13** and of the connecting rods **14a, 14b** is visible in particular in Figures from 2 to 7: Figure 2 shows the lever group **13** in the lowered connection position, and as can be noted it corresponds to a lowered position of the tie-rods **12a, 12b**; Figure 3 shows how by moving the lever group **13** to the raised disconnection position, also the tie-rods **12a, 12b** are pushed upwards by the action of the connecting rods **14a, 14b.**

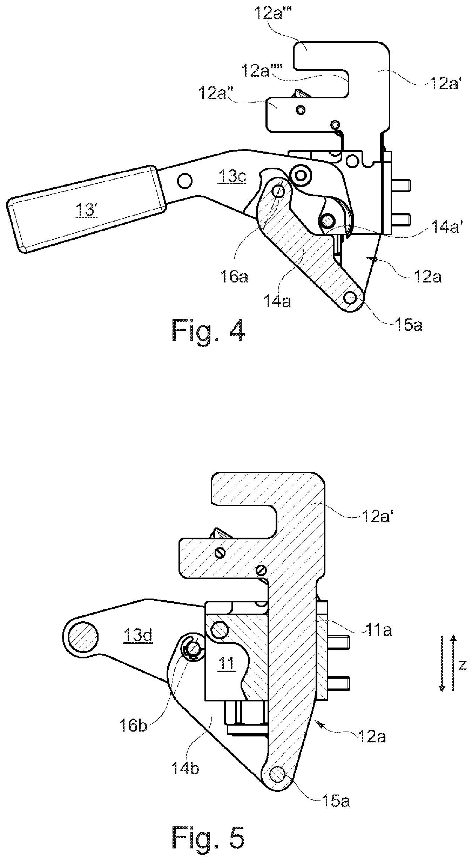

Figures 4 and 5 allow to appreciate the configuration of the connecting rods **14a, 14b** and of the tie-rods **12a, 12b,** which end above said fixed plate **11** with a C-shaped portion **12a', 12b',** comprising a lower arm **12a", 12b"** an upper arm **12a‴, 12b‴** and a substantially vertical connecting element **12aʺʺ, 12bʺʺ**.

The movement of the lever group **13** causes the movement of the connecting rods **14a, 14b** and of the tie-rods **12a, 12b** which translate in vertical direction.

As is visible in particular in Figures 2, 3, 6 and 7, on the fixed plate **10** there is provided a closing lid **18** apt to protect the upper surface of the fixed plate **11,** in which the female couplings **11'** are housed, from dirt and dust.

Advantageously, on the lever group **13** there is a safety system **17,** comprising according to what is known from the state of the art a lock in turn comprising an abutment plug apt to fit into a special receiving hole obtained on the plate apt to lock the movement of the lever.

The multi-connection fixed part **10** can preferably be fixed to the operating machine by means of two screws **19** placed in the frontal position and therefore easily accessible.

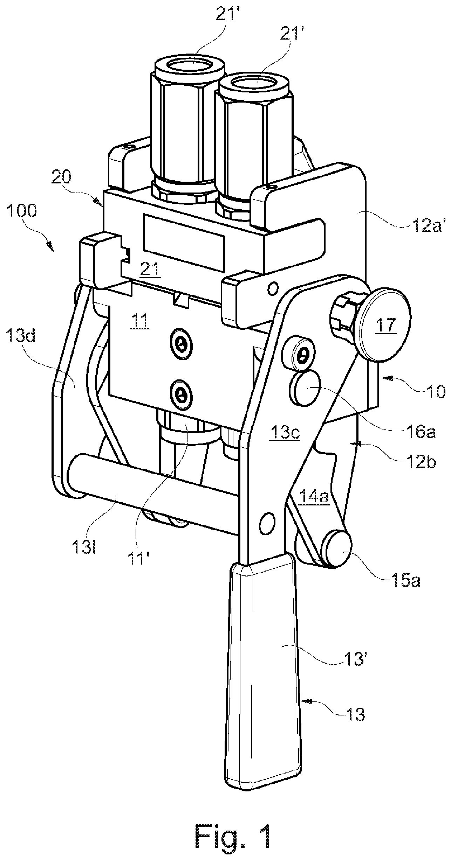

With particular reference to Figure 1, a first connection step provides for the operator to act on the lock **17** by operating it in order to be able to subsequently rotate the lever group **13** by acting on the handle **13'.**

The lock **17** could be either of the *push* type or of the *pull* type, so in order to be able to operate it, the operator may have to push or pull outwards the safety button.

Figure 3 illustrates the lever group **13** rotated into the "open" position corresponding to a disconnection condition. The centre of rotation of the lever consists of the first pins **13a, 13b,** advantageously consisting of screws screwed in the fixed plate **11.**

As already mentioned, the connecting rods **14a, 14b** are connected to the lever **13** through the pins **16a, 16b,** therefore the rotation of the lever **13** also generates a displacement of the aforementioned connecting rods **14a, 14b.**

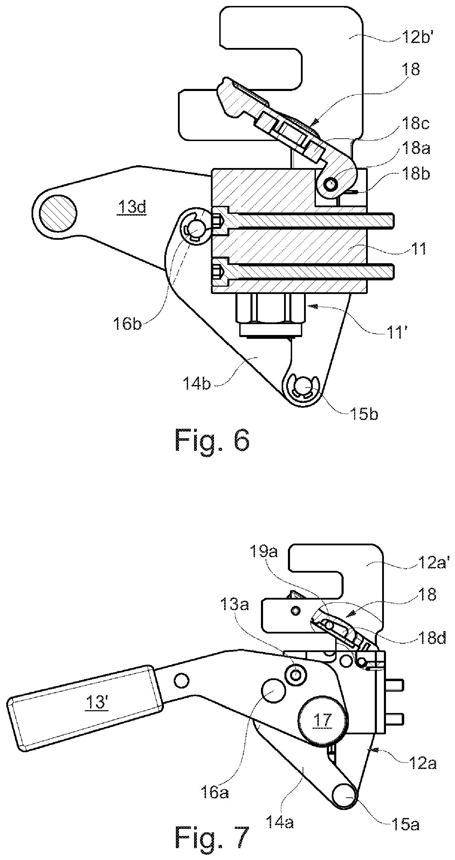

Still with reference to Figure 3, it can be noted that in the tie-rods **12a, 12b** there are plugs **19a, 19b,** preferably cylindrical, projecting from said tie-rods towards the inside of the multi-connection device **100** apt to cause the automatic opening movement of the closing lid **18** and on the other hand to keep it in the closed position as will be explained below with reference in particular to the sectional views of Figures 6 and 7.

Figure 4 illustrates a partial section of the multi-connection according to the present invention in side view in which the connecting rods **14a, 14b** can be noted in the disconnection position corresponding to the open lever **13.**

Advantageously, protrusions **14a'** (and **14b'** not depicted in the figures) are suitably obtained on said connecting rods **14a, 14b** in order to abut on the lower part of the fixed plate **11** acting as a stroke stop for the rotary movement of the lever **13.**

With particular reference to Figure 5, it illustrates a further partial section of the multi-connection according to the present invention in the condition of Figure 4, in which the tie-rods **12a, 12b** can be observed which can slide along the substantially vertical direction indicated by the arrows **Z** in the figure, within an appropriate seat **11a** (and **11b** not shown in the figures) suitably obtained in said fixed plate **11**.

When the lever group **13** is in the "open" position corresponding to a disconnection condition, the connecting rods **14a, 14b** push the tie-rods **12a, 12b** upwards.

With particular reference to Figure 6, it can be observed how preferably the lid **18** is hinged to the fixed plate **11** by means of a pin **18a** in correspondence of which a torsional spring **18b** is advantageously provided, which is prone to keep the lid **18** in closed position.

In addition, a gasket **18c** is applied to the lid with the aim of ensuring the closure and to protect the coupling surface of the fixed plate **11**.

Figure 7 illustrates a partial section of the multi-connection according to the present invention in side view that allows to observe how the cylindrical plugs **19a, 19b** projecting inwards from said tie-rods **12a, 12b** engage in a corresponding shaped seat **18d** obtained in the lid **18.**

When the rotation of the lever **13** causes, through the connecting rods **14a, 14b,** the upward translation of the tie-rods **12a, 12b,** the cylindrical plugs **23a, 23b** engaged in the shaped seat **18d** cause the lid **18** to be lifted and opened.

Conversely, when the lever **13** is not lifted, the lid **18** remains in its closed position resting on the cylindrical plugs **23a, 23b** pushed by the torsional spring **18b.**

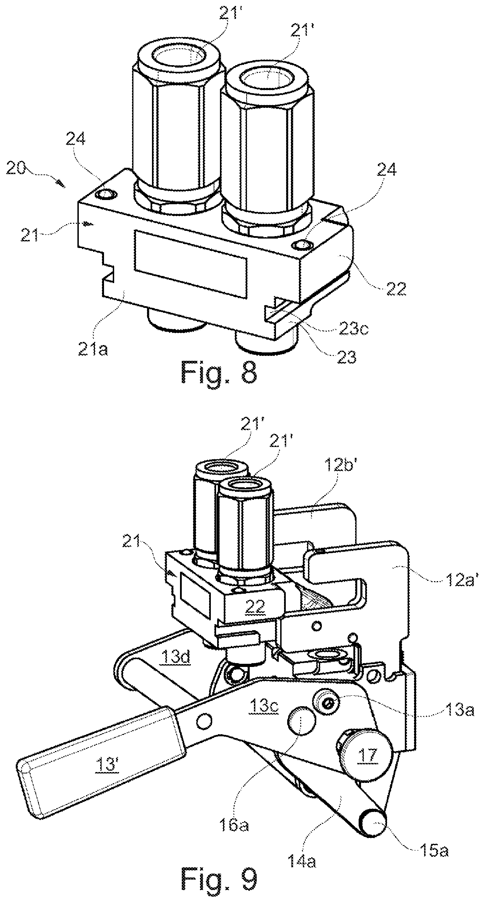

Figure 8 illustrates the movable part **20** of the multi-connection device with frontal connection **100** according to the present invention.

It preferably comprises a movable plate **21** supporting a plurality of male couplings **21'** for the connection with the corresponding female couplings **11'** that equip said fixed plate **11.**

Said movable plate further comprises one or more, advantageously two, spherical pushers **24** for the reciprocal positioning of the upper movable plate **21** with respect to the lower fixed plate **11,** which will comprise suitable receiving seats for said pushers.

Figure 9 illustrates a subsequent connection step in which the operator can bring the movable part **20** closer to the fixed part **10** by inserting the movable plate **21** between the tie-rods **12a, 12b** of the fixed part taking care to align the protrusions **22** of the movable plate with the relative C-shaped portions **12a', 12b'.**

Advantageously, the lower face of said protrusions **22** rests on the upper edge of the lower arms **12a", 12b"** of said shaped portions and slides on them in a frontal inserting movement of the movable plate **21** within the seats of said tie-rods **12a, 12b,** while the upper face of said protrusions **22** contacts the lower portion of the upper arms **12a", 12b‴**. The inserting movement can continue until the protrusions **22** abut the substantially vertical surface of said connecting element **12aʺʺ, 12bʺʺ**.

The lateral grooves **23c** obtained on the lateral faces **23** of said movable plate **21** are apt to receive the cylindrical plugs **23a, 23b,** as will be better seen with reference to Figures from 10 to 14.

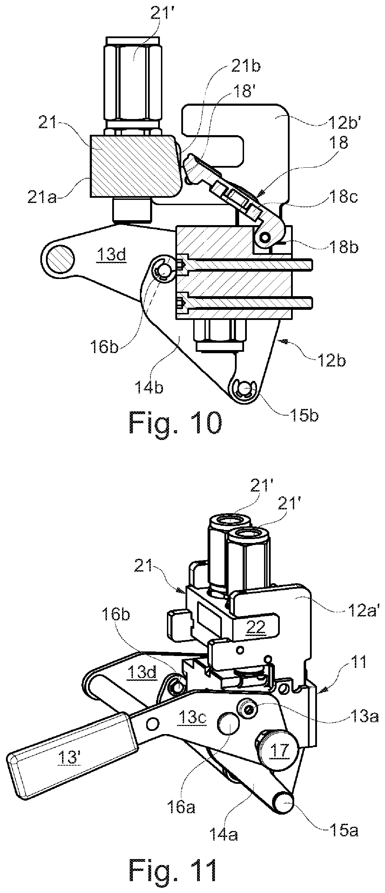

In fact, in Figure 10 a section of the multi-connection according to the present invention is illustrated with a vertical plane in which it is possible to note that the back surface **21b** of the movable plate **21,** opposite to the frontal surface **21a,** is advantageously suitably shaped, preferably inclined with respect to the vertical direction, to contact the frontal edge **18'** of the closing lid **18** so that the pushing of the movable plate **21** towards the bottom of the C-shaped grooves **12a', 12b'** of the tie-rods causes the complete opening of the lid **18.**

Figure 11 illustrates the subsequent connection step in which the movable plate **21** is completely inserted into the shaped grooves **12a', 12b'** obtained in the tie-rods.

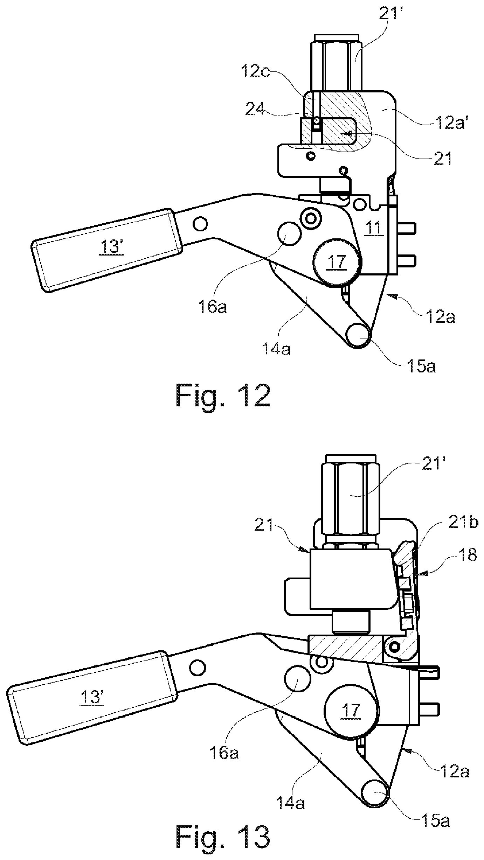

With reference to Figure 12, it illustrates a partial section in which it can be noted that the movable plate **21** is held in position by said spherical pushers **24** which each find an abutment in a corresponding hole **12c** provided in correspondence of the tie-rods, in particular in correspondence of the lower surface of the upper arm **12a‴, 12b‴**.

The centring between the pushers **24** and the hole **12c** of the tie-rods **12a, 12b** guarantees the correct alignment of the male couplings **21'** with the respective female couplings **11',** thus guaranteeing the possibility of connecting hydraulic lines.

Figure 13 shows a section of the multi-connection device **100** according to the present invention always in the same coupling step between the movable part **20** and the fixed part **10** in which it can be noted how the back profile **21b** of the movable plate **21** has pushed the lid **18** into the position of complete opening.

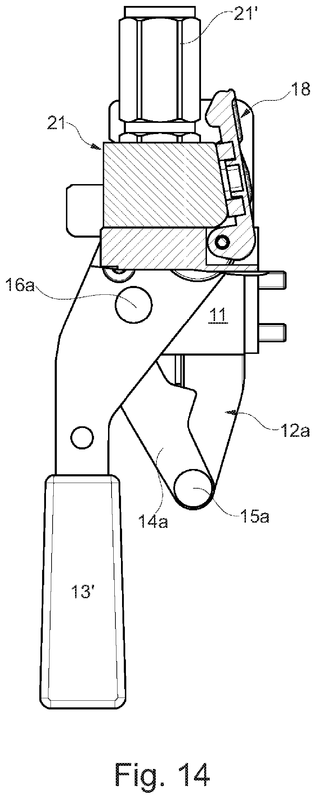

At this point the operator can act on the lever **13'** to make the connection. The rotation of the lever group **13** involves the displacement of the connecting rods **14a, 14b** which in turn cause the downward translation of the tie-rods **12a, 12b.** The movable part **20** is therefore connected to the fixed part **10** as shown in Figure 14.

The lock **17** locks the lever group **13** in the "closed" position and, as visible in Figure 14, the two coupled plates **11, 21** in which it can be noted that the lid **18** rests on the back surface **21b,** preferably inclined, of the movable plate **21**.

The gasket **18c** also rests on the surface of the movable plate **21** which in this way remains protected from any external agents connected to the device.

With regard to disconnection operations, it is firstly necessary to unlock the lock **17,** then it is necessary to disconnect the lines by leading the lever group **13** to the "open" position and, subsequently, remove the movable plate **21** by extracting it from the C-shaped grooves of the tie-rods.

It is then possible to rotate the lever **13** leading it back to the "closed" position. The sequence is the reverse of the illustrated connection sequence.

Advantageously, when the fixed plate is disconnected the cylindrical plugs **23a and 23b** assembled in the tie-rods and facing inwards of the multi-connection, push the lid **18** helped by the action of the coil spring **18b,** keeping it in the closed position and compressing the gasket **18c,** thus ensuring the seal against dirt as illustrated in Figure 2.

It has thus been shown how a compact frontal connection plate device for the simultaneous connection of a plurality of hydraulic lines and/or electrical connectors according to the present invention achieves the intended task and purposes.

In particular, it has been shown how the compact frontal connection plate device for the simultaneous connection of a plurality of hydraulic lines and/or electrical connectors according to the present invention, in particular thanks to the plate movement system by means of kinematics comprising the connecting rods and the tie-rods, has more compact dimensions than a multi-plate connection device of known type.

In addition, it has been shown how the compact frontal connection plate device for the simultaneous connection of a plurality of hydraulic lines and/or electrical connectors according to the present invention allows to integrate a covering and protection lid of the fixed plate directly in the fixed part of the device and with automatic opening.

The present invention has been described by way of a non-limiting illustrative example according to preferred embodiments thereof, however, it is understood that variations and/or modifications may be made by those skilled in the art, without thereby departing from the relative scope of protection, as defined in the accompanying claims.

## Claims

1. A frontal connection plate device (100) for the simultaneous connection of a plurality of hydraulic lines and/or electrical connectors, comprising a fixed part (10) and a movable part (20), **characterized in that** said fixed part (10) comprises a fixed plate (11) within which female quick couplings (11') and/or female electrical connectors are housed, a connecting lever group (13) and at least one pair of vertical tie-rods (12a, 12b) associated in a slidable manner in vertical direction to said fixed plate (11) and moved by said lever group (13) by means of connecting rods (14a, 14b) linked to it, wherein above said fixed plate (11) said tie-rods (12a, 12b) comprise each a C-shaped portion (12a', 12b') within which a movable plate (21) of said second movable part (20) can be slidably inserted, in turn supporting male quick couplings (21') and /or male electrical connectors, wherein the movement of said lever group (13) between an "open" position and a "closed" position causes, by means of said connecting rods (14a, 14b), the movement in vertical direction of said tie-rods (12a, 12b) which causes the clamping of said movable plate (21) on said fixed plate (11) and brings said quick couplings (11', 21') and/or electrical connectors from a disconnected condition corresponding to said open lever group (13) position to a connected condition corresponding to said closed lever group (13) position.

2. A frontal connection plate device (100) according to the preceding claim, **characterized in that** said lever group (13) in turn comprises a handle (13') apt to be gripped by the operator for the movement of lever group (13), and a pair of shaped plates (13c, 13d) hinged on the opposite sides of said fixed plate (11) at a pair of first coaxial pins (13a, 13b).

3. A frontal connection plate device (100) according to one or more of the preceding claims, **characterized in that** each of said connecting rods (14a, 14b) is pivoted to one of said vertical tie-rods (12a, 12b) at a second hinge pin (15a, 15b), and to one of said shaped plates (13c, 13d) at a third hinge pin (16a, 16b), so that the movement of the lever group (13) in the "open" disconnection position causes the upward translation of the tie-rods (12a, 12b) which are pushed by said connecting rods (14a, 14b).

4. A frontal connection plate device (100) according to one or more of the preceding claims, **characterized in that** each of said tie-rods (12a, 12b) comprises a C-shaped portion (12a',12b') formed by a lower arm (12a", 12b"), an upper arm (12a'", 12b"'), and a substantially vertical connecting element (12a"", 12b"") apt to act as stroke end for the inserting movement of said movable plate (21) within said C-shaped portions (12a', 12b'), wherein said C-shaped portion (12a', 12b') of said tie-rods (12a, 12b) is placed above said fixed plate (11).

5. A frontal connection plate device (100) according to one or more of the preceding claims, **characterized in that** said movable plate (21) comprises a pair of protrusions (22) projecting sideways and each configured to fit in one corresponding of said C-shaped portions (12a', 12b') of said tie-rods (12a, 12b).

6. A frontal connection plate device (100) according to the preceding claim, **characterized in that**, when the movable plate (21) is inserted in said C-shaped portions (12a', 12b') of said tie-rods (12a, 12b), the lower face of said protrusions (22) slidably rests on the upper edge of the lower arms (12a", 12b") of said C-shaped portions (12a', 12b') in a frontal inserting movement of the movable plate (21) within the seats of said tie-rods (12a, 12b), while the upper face of said protrusions (22) contacts the lower portion of the upper arms (12a‴, 12b‴), said inserting movement being stopped by the abutment between said protrusions (22) and the substantially vertical surfaces of the connecting element (12a"", 12b"") which connects said lower arms (12a", 12b") to said upper arms (12a'", 12b'").

7. A frontal connection plate device (100) according to one or more of the preceding claims, **characterized in that** it further comprises a closing lid (18) apt to cover the upper surface of the fixed plate (11) from which the female couplings (11') raise protecting it from dirt and dust, and **in that** it further comprises at least a pair of plugs (19a, 19b), preferably cylindrical, projecting from said tie-rods (12a, 12b) towards the internal part of the multi-connection and apt to cause the automatic opening movement of the closing lid (18) when said lever group (13) is led to the "open" position, and on the other hand to keep it in closed position by means of the cylindrical plugs (23a, 23b), when said lever group (13) is led to the "closed" position while the device (100) is uncoupled.

8. A frontal connection plate device (100) according to the preceding claim, **characterized in that** said closing lid (18) comprises at least a shaped seat (18d) obtained at least at a lateral surface of said lid (18) and configured to receive a corresponding of said plugs (19a, 19b) projecting from said tie-rods (12a, 12b).

9. A frontal connection plate device (100) according to the preceding claim, **characterized in that** said closing lid (18) is hinged to said fixed plate (11) by means of a pin (18a) in correspondence of which a torsional spring (18b) is advantageously provided and apt to keep the lid (18) in closed position.

10. A frontal connection plate device (100) according to the preceding claim, **characterized in that** said closing lid (18) further comprises a gasket (18c) apt to ensure the seal and to protect the upper surface of said fixed plate (11).

11. A frontal connection plate device (100) according to one or more of the preceding claims, **characterized in that** said movable plate (21) comprises a properly shaped back surface (21b) configured to contact the frontal edge (18') of the closing lid (18), so that the translational movement of said movable plate (21) towards the bottom of the C-shaped grooves (12a', 12b') of the tie-rods causes the complete opening of the lid (18).

12. A frontal connection plate device (100) according to one or more of the preceding claims, **characterized in that** it further comprises, at the upper surface of said movable plate (21), at least a pair of spherical pushers (24) and, on the lower surface of said upper arm (12a‴, 12b‴) of said C-shaped portions (12a', 12b') of said tie-rods (12a, 12b), corresponding holes (12c).

## Patentansprüche

1. Frontale Verbindungsplattenvorrichtung (100) für die gleichzeitige Verbindung einer Vielzahl von hydraulischen Leitungen und/oder elektrischen Verbindern, umfassend einen festen Teil (10) und einen bewegbaren Teil (20), **dadurch gekennzeichnet, dass** der feste Teil (10) eine feste Platte (11), in der Buchsen-Schnellkupplungen (11') und/oder elektrische Buchsenverbinder untergebracht sind, eine Verbindungshebelgruppe (13) und mindestens ein Paar vertikaler Zugstangen (12a, 12b) umfasst, die in vertikaler Richtung verschiebbar mit der festen Platte (11) assoziiert sind und von der Hebelgruppe (13) mittels mit ihr verknüpfter Verbindungsstangen (14a, 14b) bewegt werden, wobei die Zugstangen (12a, 12b) oberhalb der festen Platte (11) jeweils einen C-förmigen Abschnitt (12a', 12b') aufweisen, in den eine bewegbare Platte **(21)** des zweiten bewegbaren Teils (20) verschiebbar eingefügt werden kann, die ihrerseits Steck-Schnellkupplungen (21') und/oder elektrische Steckverbinder stützt, wobei die Bewegung der Hebelgruppe (13) zwischen einer "offenen" Position und einer "geschlossenen" Position mittels der Verbindungsstangen (14a, 14b) die Bewegung der Zugstangen (12a, 12b) in vertikaler Richtung bewirkt, die das Festklemmen der bewegbaren Platte (21) auf der festen Platte (11) bewirkt und die Schnellkupplungen (11', 21') und/oder elektrischen Verbinder von einem getrennten Zustand, der der offenen Position der Hebelgruppe (13) entspricht, in einen verbundenen Zustand bringt, der der geschlossenen Position der Hebelgruppe (13) entspricht.

2. Frontale Verbindungsplattenvorrichtung (100) nach dem vorhergehenden Anspruch, **dadurch gekennzeichnet, dass** die Hebelgruppe (13) ihrerseits einen Griff (13') umfasst, der geeignet ist, um vom Bediener zur Bewegung der Hebelgruppe (13) gegriffen zu werden, und ein Paar geformter Platten (13c, 13d), die gelenkig auf den entgegengesetzten Seiten der festen Platte (11) an einem Paar erster koaxialer Zapfen (13a, 13b) befestigt sind.

3. Frontale Verbindungsplattenvorrichtung (100) nach einem oder mehreren der vorhergehenden Ansprüche, **dadurch gekennzeichnet, dass** jede der Verbindungsstangen (14a, 14b) an einer der vertikalen Zugstangen (12a, 12b) an einem zweiten Gelenkzapfen (15a, 15b) und an einer der geformten Platten (13c, 13d) an einem dritten Gelenkzapfen (16a, 16b) angelenkt ist, sodass die Bewegung der Hebelgruppe (13) in der "offenen" Trennposition die Translation der Zugstangen (12a, 12b), die von den Verbindungsstangen (14a, 14b) gedrückt werden, nach oben bewirkt.

4. Frontale Verbindungsplattenvorrichtung (100) nach einem oder mehreren der vorhergehenden Ansprüche, **dadurch gekennzeichnet, dass** jede der Verbindungsstangen (12a, 12b) einen C-förmigen Abschnitt (12a', 12b') umfasst, der durch einen unteren Arm (12a", 12b"), einen oberen Arm (12a"', 12b"') und ein im Wesentlichen vertikales Verbindungselement (12a"", 12b"") gebildet ist, das geeignet ist, um als Hubende für die Einfügebewegung der bewegbaren Platte (21) in die C-förmigen Abschnitte (12a', 12b') zu wirken, wobei der C-förmige Abschnitt (12a', 12b') der Zugstangen (12a, 12b) oberhalb der festen Platte (11) platziert ist.

5. Frontale Verbindungsplattenvorrichtung (100) nach einem oder mehreren der vorhergehenden Ansprüche, **dadurch gekennzeichnet, dass** die bewegbare Platte (21) ein Paar Vorsprünge (22) umfasst, die seitlich hervorstehen und jeweils ausgelegt sind, um in einen entsprechenden der C-förmigen Abschnitte (12a', 12b') der Zugstangen (12a, 12b) zu passen.

6. Frontale Verbindungsplattenvorrichtung (100) nach dem vorhergehenden Anspruch, **dadurch gekennzeichnet, dass** die untere Fläche der Vorsprünge (22), wenn die bewegbare Platte (21) in die C-förmigen Abschnitte (12a', 12b') der Zugstangen (12a, 12b) eingefügt ist, verschiebbar auf dem oberen Rand der unteren Arme (12a", 12b") der C-förmigen Abschnitte (12a', 12b') in einer frontalen Einfügebewegung der bewegbaren Platte (21) in die Sitze der Zugstangen (12a, 12b) ruht, während die obere Fläche der Vorsprünge (22) den unteren Abschnitt der oberen Arme (12a"', 12b"') berührt, wobei die Einfügebewegung durch den Anschlag zwischen den Vorsprüngen (22) und den im Wesentlichen vertikalen Oberflächen des Verbindungselements (12a"", 12b""), das die unteren Arme (12a", 12b") mit den oberen Armen (12a"', 12b"') verbindet, gestoppt wird.

7. Frontale Verbindungsplattenvorrichtung (100) nach einem oder mehreren der vorhergehenden Ansprüche, **dadurch gekennzeichnet, dass** sie ferner einen Verschlussdeckel (18) umfasst, der geeignet ist, um die obere Oberfläche der festen Platte (11), von der sich die Buchsenkupplungen (11') erheben, abzudecken und sie vor Schmutz und Staub zu schützen, und dass sie ferner mindestens ein Paar vorzugsweise zylindrischer Stopfen (19a, 19b) umfasst, die von den Zugstangen (12a, 12b) in Richtung des inneren Teils der Mehrfachverbindung hervorstehen und geeignet sind, um die automatische Öffnungsbewegung des Verschlussdeckels (18) zu bewirken, wenn die Hebelgruppe (13) in die "offene" Position geführt wird, und sie andererseits mittels der zylindrischen Stopfen (23a, 23b) in geschlossener Position zu halten, wenn die Hebelgruppe (13) in die "geschlossene" Position geführt wird, während die Vorrichtung (100) abgekuppelt ist.

8. Frontale Verbindungsplattenvorrichtung (100) nach dem vorhergehenden Anspruch, **dadurch gekennzeichnet, dass** der Verschlussdeckel (18) mindestens einen geformten Sitz (18d) umfasst, der zumindest an einer seitlichen Oberfläche des Deckels (18) ausgebildet und ausgelegt ist, um einen entsprechenden der von den Zugstangen (12a, 12b) hervorstehenden Stopfen (19a, 19b) aufzunehmen.

9. Frontale Verbindungsplattenvorrichtung (100) nach dem vorhergehenden Anspruch, **dadurch gekennzeichnet, dass** der Verschlussdeckel (18) an der festen Platte (11) mittels eines Zapfens (18a) angelenkt ist, an dessen Stelle vorteilhafterweise eine Torsionsfeder (18b) vorgesehen ist, die geeignet ist, um den Deckel (18) in geschlossener Position zu halten.

10. Frontale Verbindungsplattenvorrichtung (100) nach dem vorhergehenden Anspruch, **dadurch gekennzeichnet, dass** der Verschlussdeckel (18) ferner eine Dichtung (18c) umfasst, die geeignet ist, um die Abdichtung zu gewährleisten und die obere Oberfläche der festen Platte (11) zu schützen.

11. Frontale Verbindungsplattenvorrichtung (100) nach einem oder mehreren der vorhergehenden Ansprüche, **dadurch gekennzeichnet, dass** die bewegbare Platte (21) eine geeignet geformte hintere Oberfläche (21b) umfasst, die ausgelegt ist, um den vorderen Rand (18') des Verschlussdeckels (18) zu berühren, sodass die Translationsbewegung der bewegbaren Platte (21) in Richtung der Unterseite der C-förmigen Nuten (12a', 12b') der Zugstangen die vollständige Öffnung des Deckels (18) bewirkt.

12. Frontale Verbindungsplattenvorrichtung (100) nach einem oder mehreren der vorhergehenden Ansprüche, **dadurch gekennzeichnet, dass** sie ferner an der oberen Oberfläche der bewegbaren Platte (21) mindestens ein Paar kugelförmige Schubelemente (24) und an der unteren Oberfläche des oberen Arms (12a"', 12b"') der C-förmigen Abschnitte (12a', 12b') der Zugstangen (12a, 12b) entsprechende Löcher (12c) umfasst.

## Revendications

1. Dispositif de plaque de raccordement frontale (100) pour le raccordement simultané d'une pluralité de conduites hydrauliques et/ou de connecteurs électriques, comprenant une partie fixe (10) et une partie mobile (20), **caractérisé en ce que** ladite partie fixe (10) comprend une plaque fixe (11) au sein de laquelle des raccords rapides femelles (11') et/ou des connecteurs électriques femelles sont logés, un groupe levier (13) de raccordement et au moins une paire de tirants (12a, 12b) verticaux associés d'une manière coulissante dans la direction verticale à ladite plaque fixe (11) et déplacés par ledit groupe levier (13) au moyen de bielles (14a, 14b) reliées à celui-ci, dans lequel au-dessus de ladite plaque fixe (11) lesdits tirants (12a, 12b) comprennent chacun une portion en forme de C (12a', 12b') au sein de laquelle une plaque mobile **(21)** de ladite deuxième partie mobile (20) peut être insérée de manière coulissante, portant à son tour des raccords rapides mâles (21') et/ou des connecteurs électriques mâles, dans lequel le mouvement dudit groupe levier (13) entre une position « ouverte » et une position « fermée » provoque, au moyen desdites bielles (14a, 14b), le mouvement dans la direction verticale desdits tirants (12a, 12b) qui provoque le serrage de ladite plaque mobile (21) sur ladite plaque fixe (11) et fait passer lesdits raccords rapides (11', 21') et/ou connecteurs électriques d'un état déconnecté correspondant à ladite position ouverte du groupe levier (13) à un état connecté correspondant à ladite position fermée du groupe levier (13).

2. Dispositif de plaque de raccordement frontale (100) selon la revendication précédente, **caractérisé en ce que** ledit groupe levier (13) comprend à son tour une poignée (13') apte à être saisie par l'opérateur pour le mouvement du groupe levier (13), et une paire de plaques façonnées (13c, 13d) articulées sur les côtés opposés de ladite plaque fixe (11) au niveau d'une paire de premières broches coaxiales (13a, 13b).

3. Dispositif de plaque de raccordement frontale (100) selon l'une ou plusieurs des revendications précédentes, **caractérisé en ce que** chacune desdites bielles (14a, 14b) est pivotée vers l'un desdits tirants (12a, 12b) verticaux au niveau d'un deuxième axe d'articulation (15a, 15b), et vers l'une desdites plaques façonnées (13c, 13d) au niveau d'un troisième axe d'articulation (16a, 16b), de sorte que le mouvement du groupe levier (13) dans la position de déconnexion « ouverte » provoque le déplacement en translation vers le haut des tirants (12a, 12b) qui sont poussés par lesdites bielles (14a, 14b).

4. Dispositif de plaque de raccordement frontale (100) selon l'une ou plusieurs des revendications précédentes, **caractérisé en ce que** chacun desdits tirants (12a, 12b) comprend une portion en forme de C (12a', 12b') formée par un bras inférieur (12a", 12b"), un bras supérieur (12a"', 12b"'), et un élément de raccordement (12a"", 12b"") sensiblement vertical apte à servir de fin de course pour le mouvement d'insertion de ladite plaque mobile (21) au sein desdites portions en forme de C (12a', 12b'), dans lequel ladite portion en forme de C (12a', 12b') desdits tirants (12a, 12b) est placée au-dessus de ladite plaque fixe (11).

5. Dispositif de plaque de raccordement frontale (100) selon l'une ou plusieurs des revendications précédentes, **caractérisé en ce que** ladite plaque mobile (21) comprend une paire de saillies (22) faisant saillie latéralement et configurées chacune pour s'emboîter dans une portion correspondante parmi lesdites portions en forme de C (12a', 12b') desdits tirants (12a, 12b).

6. Dispositif de plaque de raccordement frontale (100) selon la revendication précédente, **caractérisé en ce que**, lorsque la plaque mobile (21) est insérée dans lesdites portions en forme de C (12a', 12b') desdits tirants (12a, 12b), la face inférieure desdites saillies (22) repose de manière coulissante sur le bord supérieur des bras inférieurs (12a", 12b") desdites portions en forme de C (12a', 12b') dans un mouvement d'insertion frontale de la plaque mobile (21) au sein des sièges desdits tirants (12a, 12b), tandis que la face supérieure desdites saillies (22) est en contact avec la portion inférieure des bras supérieurs (12a"', 12b"'), ledit mouvement d'insertion étant arrêté par la mise en butée entre lesdites saillies (22) et les surfaces sensiblement verticales de l'élément de raccordement (12a"", 12b"") qui raccorde lesdits bras inférieurs (12a", 12b") auxdits bras supérieurs (12a"", 12b"').

7. Dispositif de plaque de raccordement frontale (100) selon l'une ou plusieurs des revendications précédentes, **caractérisé en ce qu'**il comprend en outre un couvercle de fermeture (18) apte à recouvrir la surface supérieure de la plaque fixe (11) à partir de laquelle les raccords femelles (11') s'élèvent en la protégeant contre les saletés et la poussière, et **en ce qu'**il comprend en outre au moins une paire de bouchons (19a, 19b), de préférence cylindriques, faisant saillie à partir desdits tirants (12a, 12b) vers la partie interne de la connexion multiple et aptes à provoquer le mouvement d'ouverture automatique du couvercle de fermeture (18) lorsque ledit groupe levier (13) est amené dans la position « ouverte », et d'autre part à le maintenir dans la position fermée au moyen des bouchons cylindriques (23a, 23b), lorsque ledit groupe levier (13) est amené dans la position « fermée » alors que le dispositif (100) est désaccouplé.

8. Dispositif de plaque de raccordement frontale (100) selon la revendication précédente, **caractérisé en ce que** ledit couvercle de fermeture (18) comprend au moins un siège façonné (18d) obtenu au moins au niveau d'une surface latérale dudit couvercle (18) et configuré pour recevoir un bouchon correspondant parmi lesdits bouchons (19a, 19b) faisant saillie à partir desdits tirants (12a, 12b).

9. Dispositif de plaque de raccordement frontale (100) selon la revendication précédente, **caractérisé en ce que** ledit couvercle de fermeture (18) est articulé sur ladite plaque fixe (11) au moyen d'une goupille (18a) en correspondance de laquelle un ressort de torsion (18b) est avantageusement ménagé et apte à maintenir le couvercle (18) dans la position fermée.

10. Dispositif de plaque de raccordement frontale (100) selon la revendication précédente, **caractérisé en ce que** ledit couvercle de fermeture (18) comprend en outre un joint (18c) apte à assurer l'étanchéité et à protéger la surface supérieure de ladite plaque fixe (11).

11. Dispositif de plaque de raccordement frontale (100) selon l'une ou plusieurs des revendications précédentes, **caractérisé en ce que** ladite plaque mobile (21) comprend une surface arrière (21b) adéquatement façonnée configurée pour être en contact avec le bord frontal (18') du couvercle de fermeture (18), de sorte que le mouvement de translation de ladite plaque mobile (21) vers le fond des rainures en forme de C (12a', 12b') des tirants provoque l'ouverture complète du couvercle (18).

12. Dispositif de plaque de raccordement frontale (100) selon l'une ou plusieurs des revendications précédentes, **caractérisé en ce qu'**il comprend en outre, au niveau de la surface supérieure de ladite plaque mobile (21), au moins une paire de poussoirs sphériques (24) et, sur la surface inférieure dudit bras supérieur (12a‴, 12b‴) desdites portions en forme de C (12a', 12b') desdits tirants (12a, 12b), des trous (12c) correspondants.
